# EUROPEAN PATENT APPLICATION

(11) **EP 1 813 852 A1**
(43) Date of publication of application: **01.08.2007**
(21) Application number: 06425322.2
(22) Date of filing: 12.05.2006
(51) Int. Cl.: F16M 13/02, A45C 11/38, G03B 17/56

(54) **Support for a photo/video recording equipment or camera**

(30) Priority: 25.01.2006 IT MI20060124
(71) Applicant: Caffarelli, Fabrizio, 20123 Milano (IT)
(72) Inventor: Caffarelli, Fabrizio, 20123 Milano (IT)
(74) Representative: Leihkauf, Steffen Falk

(57) **Abstract**

A support (1) for a photo/video recording equipment (4) or camera comprises a rest portion (2, 62) suitable for resting the support on a surface, fixing means (5) suitable to removably connect the camera (4) to an outer side of the rest portion (2, 62) and adjusting means (6) allowing the orientation of the camera (4) to be adjusted relative to the rest portion (2, 62) when the latter are connected to each other via the fixing means (5). The adjusting means (6) comprise a track (60) and a saddle (61) suitable to slide along the track (60).

## Description

The object of the present invention is a support for a portable equipment, particularly a video/sound recording equipment or photographic equipment, and the like.

Particularly, the object of the present invention is a support for a digital camcorder or camera, particularly a portable one.

Digital equipment is known and particularly appreciated in the field of amateur photography and video/sound recording. One of the advantages that this digital equipment allow to obtain over the analogue equipment is the considerable reduction in the equipment weight and size.

By the general word "camera" is meant below a camera, a camcorder or any other device suitable to perform video/sound recording, such as a cell phone suitable to acquire images and short videos.

Broad categories of digital cameras that are available on the market have such a size that a user can always bring them along, such as by placing them in a pocket. Among the accessories for these cameras, supports for the recording operation and bags for transportation are particularly appreciated.

Using a bag for carrying the equipment is however advisable in order to avoid or limit the damages that may result from accidental impacts or falls to which the objects placed in a user's pocket are frequently subjected.

On the other hand, supports for the recording operation are suitable to hold the camera in the position desired by the user even when he/she steps away for recording requirements, such as in order to appear in the recording underway. These known supports are generally provided by a tripod (which is often telescopic), an adjustable screw for fixing the camera being placed on top thereof. As to the system for fixing the camera to the screw, a suitable standard is adopted, which provides that a threaded hole matching the screw is formed in the bottom of the camera.

The known accessories mentioned above, particularly the supports, however, are not without drawbacks. In fact, they force the user who desires to make use of them to be loaded with further objects. Furthermore, the known support for the recording operation often have considerable weight and size, especially when compared with the weight and size of the camera.

The object of the present invention is to provide a support for cameras and camcorders which is lightweight and small-sized and allows one to adjust the orientation of the camera.

This and other objects are achieved by means of a support for cameras in accordance with claim 1.

Due to the interaction between a saddle and a track, the overall size of the means for adjusting the position and/or orientation of the camera can be very much reduced, thus enabling the same to be contained in a small-sized and lightweight support device.

Further characteristics and advantages of the support according to the invention will be apparent from the description below of several preferred embodiments thereof, which are merely illustrative and non-limiting, with reference to the annexed figures, in which:

Fig. 1 shows a general perspective view of a support according to a first embodiment of the invention;

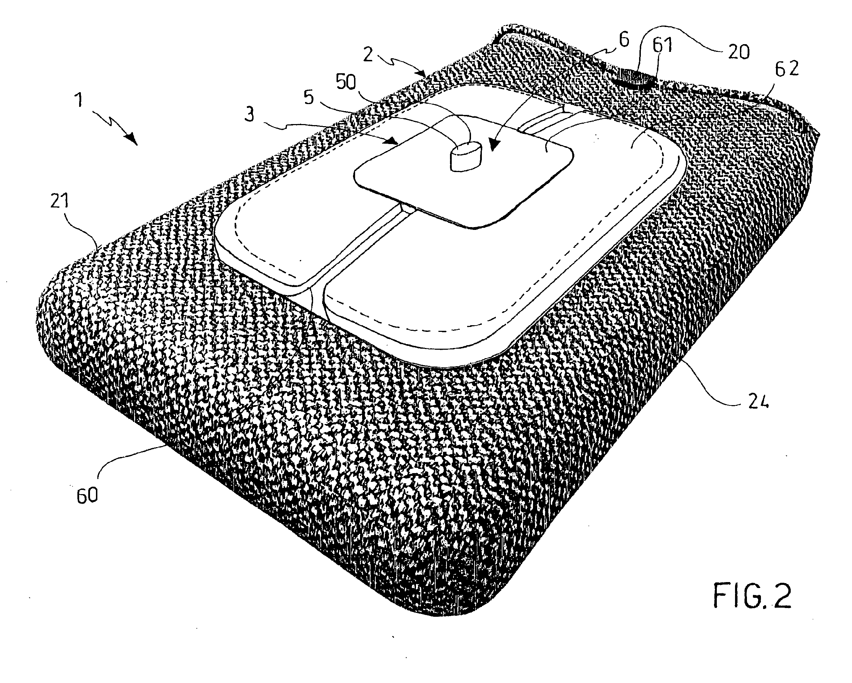

Fig. 2 shows a general perspective view of a support according to a second embodiment of the invention;

Fig. 3 to 6 show perspective views of a support according to a third embodiment in different configurations of use;

Fig. 7 and 8 are partially sectioned schematic views of a support according to two embodiments of the invention;

Fig. 9 and 10 show two possible sections along the axis IX-IX of Fig. 7;

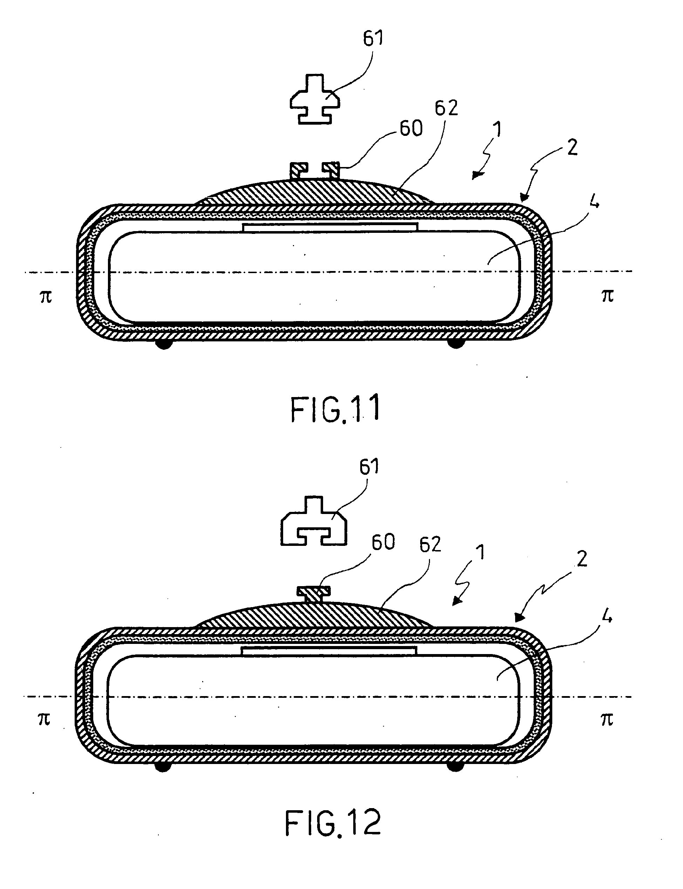

Fig. 11 and 12 show two possible sections along the axis XI-XI of Fig. 8;

Fig. 13 shows a general perspective view, partially in phantom, of a support according to an embodiment of the invention;

Fig. 14 shows a perspective view of a support according to a further embodiment of the invention;

With reference to the figures, with 1 has been generally designated a support for a camera 4.

The support 1 comprises a rest portion 2, 62 suitable to rest the support 1 on a surface, fixing means 5 suitable to removably connect the camera 4 to an outer side of the rest portion 2, 62 and adjusting means 6 allowing the orientation of the camera 4 to be adjusted relative to the rest portion 2, 62 when the latter are connected to each other via the fixing means 5.

Advantageously, the adjusting means 6 comprise a track 60 and a saddle 61 suitable to slide along the track 60.

According to an embodiment, the track 60 is bent such that upon a displacement of the saddle 61 along the bent track there corresponds a rotation of the saddle, and thus an adjustment of the angular orientation of the camera 4 to be connected thereto. Preferably, the bent track 60 substantially lays in a plane perpendicular to a main plane of the rest portion 2, 62.

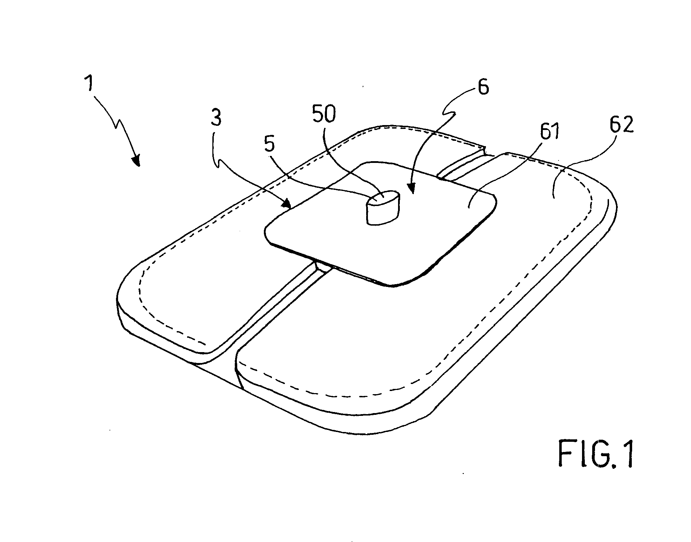

In accordance with the embodiment shown for example in Fig. 1, the rest portion 2, 62 comprises a plate 62 to be directly rested on a support surface, or alternatively, connected, in turn, to a further component of the rest portion (such as a case 2 that will be described below). Preferably, the track 60 is directly formed in this plate 62.

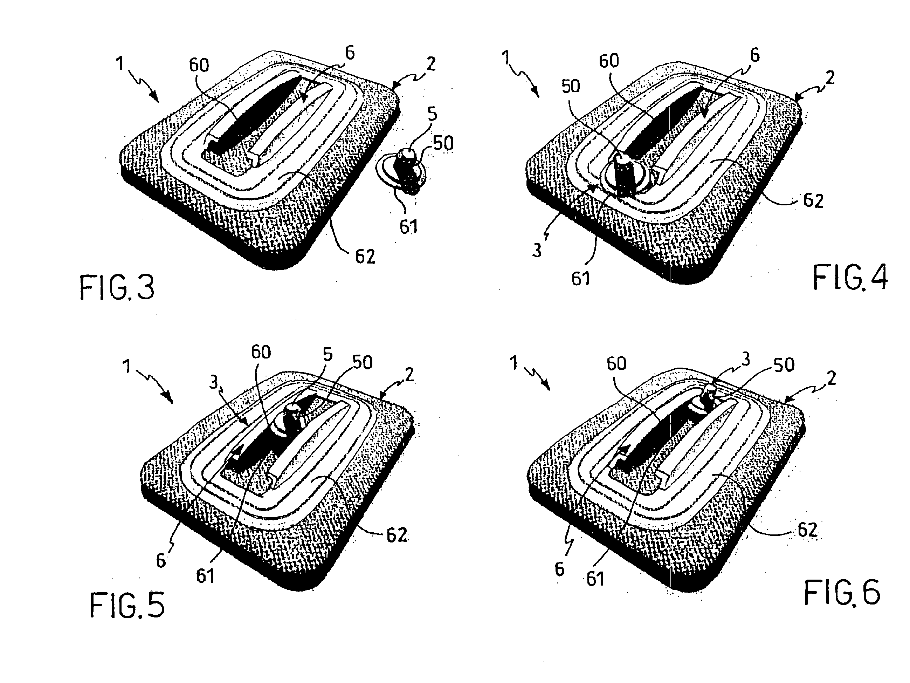

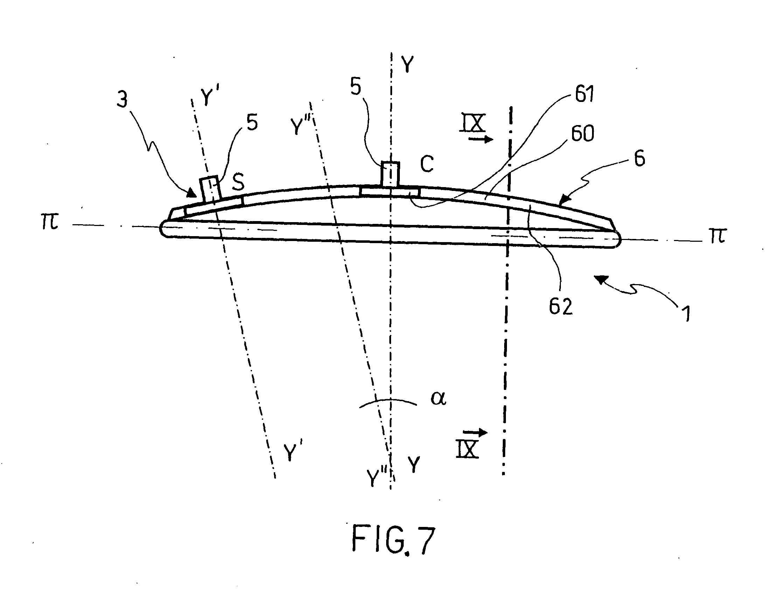

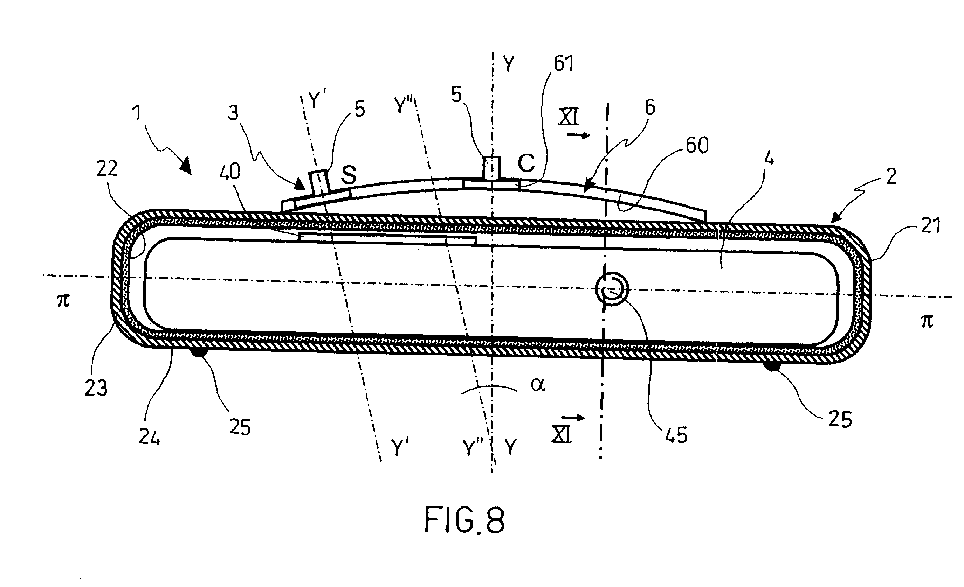

The plate 62 is advantageously not flat, even more advantageously it is convex on the side of the track 60 (as shown in Fig. 3). In accordance with the embodiments represented in Fig. 7 and 8, the plate 62 has a symmetrical shape relative to a midline.

The saddle 61 comprises a projection 50 to provide said firm fixing of the camera 4 to the support 1. By the word "firm" is meant herein below a position that, once defined and fixed by the user, does not sensibly vary under the influence of the typical loads associated with the operation of the camera 4. These typical loads are meant to comprise, for example, the weight of the camera 4, the force that the user must apply on the shutter-release button, the thrust on the camera 4 that may derive from the action of wind, and the like.

The projection 50 defines the fixing axis Y-Y. As may be noted, when the saddle 61 is shifted along the convex track 60, the orientation of the fixing axis Y-Y is changed relative to the support 1. Particularly, its inclination is varied relative to the midplane π of the rest portion, i.e. the plate 62 and/or case 2. Referring back to Fig. 7 and 8, it should be noted that when the saddle 61 is shifted from the central position C to the left-hand position S, the axis moves from the position Y to the position Y'. When the axis is rigidly shifted from the position Y' to the position Y", it is noted that its inclination relative to the plane π is changed by an angle α relative to the original position Y. If the plate 62 has a symmetrical shape relative to the midline, the position of the axis Y-Y can be continuously changed within a range equal to 2α.

The saddle 61 and the track 60 have matching shapes and such a size that their mutual coupling and the positioning of the camera 4 relative to the support 1 are made firm.

For example, the contact surfaces between the saddle 61 and the track 60 can be made of thermoplastic or elastomeric material, such that a high sliding friction is obtained. A coupling with a slight interference can be also provided, which provides a frictional resistance sufficiently high to allow a very firm positioning and sufficiently low to allow a manual adjustment of the position of the saddle along the track.

In accordance with an embodiment, such as shown in Fig. 3 to 6, the saddle 61, besides being movable along the track 60, can be also removed therefrom. This characteristic allows one to leave the saddle fixed to the camera 4, thereby the external size is reduced and the outer projections of the support 1 are eliminated.

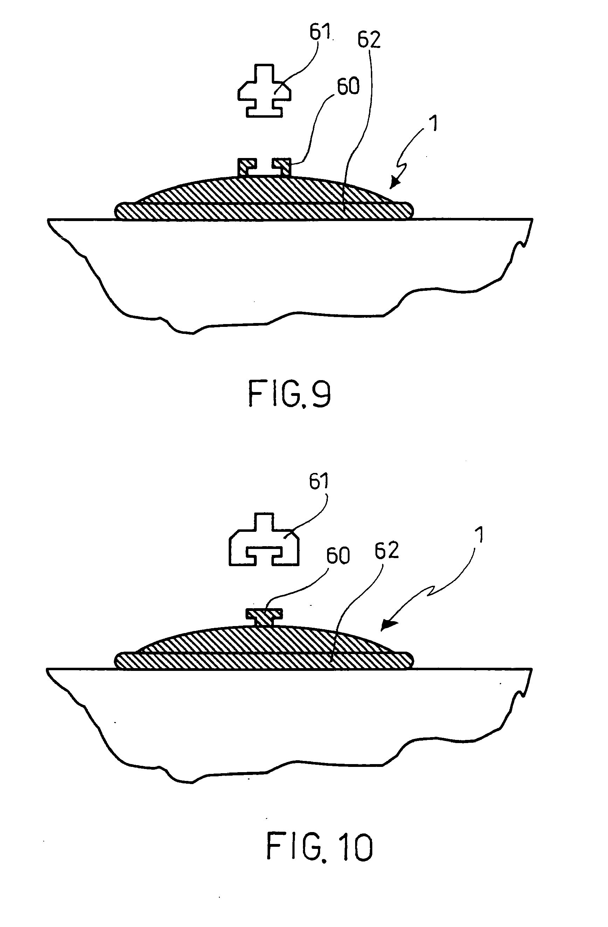

Fig. 9 and 10 illustrate two possible embodiments of the matching shapes of saddle 61 and track 60.

Fig. 9, as well as Fig. 3 and 13, illustrates an embodiment in which the track 60 has a C-shaped section and the saddle 61 is accommodated therein.

On the other hand, Fig. 10 illustrates an embodiment in which the saddle 61 has a C-shaped section and the track 60, which is either provided with a T-shaped or mushroom-shaped profile is accommodated therein.

The saddle 61 thus comes to adopt a configuration similar to that of a "flash seat" that is normally provided on the upper portion of the cameras for external flashes. This solution allows one to directly couple a camera 4 provided with a C-shaped seat to the track 60 without any saddle 61 being interposed therebetween.

This solution is particularly advantageous when the C-shaped seat is placed on a side of the camera 4 other than that on which the shutter release button is accommodated, i.e. preferably the opposite side.

Again, this solution is particularly advantageous when the C-shaped seat is placed on a side of the camera 4 other than the side on which the lens 40 is accommodated, preferably on one of the adjacent sides, even more preferably on a side perpendicular thereto.

In accordance with an embodiment, the projection 50 of the saddle 61 is a conventional screw, similar to those commonly used for fixing the cameras to the supports.

In accordance with a further embodiment, the projection 50 of the fixing means 5 is a pin having a general profile similar to that of a conventional screw, such as to be coupled to a conventional threaded hole 45 matching the conventional screw. The pin is not threaded, but it has its outer surface made in such a way that a high friction is generated within a conventional threaded hole 45. This surface preferably has a high roughness, such as due to a knurling, grooves or a corrugated profile. Alternatively, the outer surface of the pin is smooth and made of (i.e. either formed or coated with) a polymer and/or elastomer having a high friction coefficient. The high friction and/or a slight interference between the pin and the thread of the conventional threaded hole 45 ensure a firm coupling, with the same meaning as above.

The slight interference can be obtained for example by means of a localized deformation of the polymer and/or elastomer material such as to fit the conventional threaded hole 45.

The coupling thus obtained between the conventional threaded hole 45 and the unthreaded pin is similar to that obtained with the screw, the only difference being that the rotation of the pin within the conventional hole 45 is not restrained by the thread stop, and such that rotational adjustment is released from simultaneous shifting, which is undesired but unavoidable in the prior art screw connection.

The projection 50, which may be either a conventional screw or a pin, defines a fixing axis being designated with Y-Y in Fig. 7 and 8.

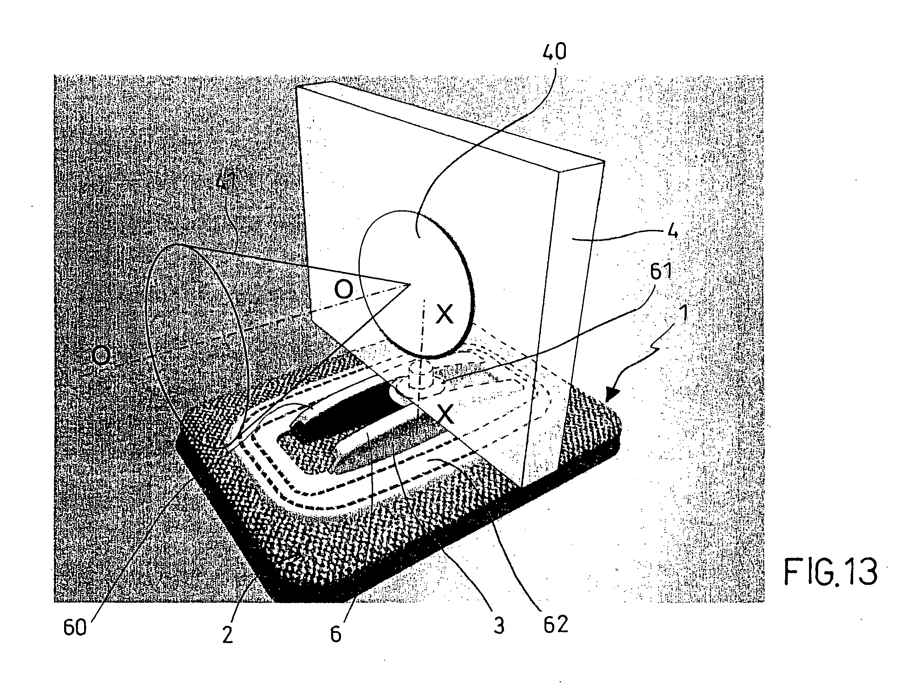

With reference to Fig. 13, several references are provided below in order to define the orientation of the camera 4 relative to the support 1. The camera 4 comprises a lens 40 capable of recording an image comprised in a shooting angle 41. The shooting angle 41, which generally has a varying amplitude, develops about an optical axis O-O. It is assumed below that the position of the optical axis O-O is fixed relative to the framework of the camera 4.

It is also assumed that the framework of the camera 4 comprises the conventional threaded hole 45 matching the conventional screw. The conventional threaded hole 45 defines an axis X-X that is assumed to be fixed relative to the framework of the camera 4.

The relative position between the optical axis O-O and the axis X-X can be varied among different camera models, but it is assumed that the same is maintained unchanged once a specific model of camera 4 has been fixed.

In view of what has been discussed above, it will be apparent to those skilled in the art that the position of the optical axis O-O and the shooting angle 41 can be controlled by controlling the spatial position of the axis X-X. The orientation of the camera 4 can be definitively controlled.

The orientation of the camera 4 is selected by the user such that the image he/she desires to record is comprised within the shooting angle 41.

The fixing means 5 of the camera 4, i.e. the projection 50, firmly fixes the relative position between the axis X-X (of the camera threaded hole 45) and the fixing axis Y-Y, preferably by making them to coincide.

The means 6 for adjusting the orientation of the camera 4, i.e. the track and the saddle, allow adjusting and firmly fixing the relative position of the fixing axis Y-Y relative to the support 1.

Consequently, a firm connection is obtained between the camera 4 and the support 1.

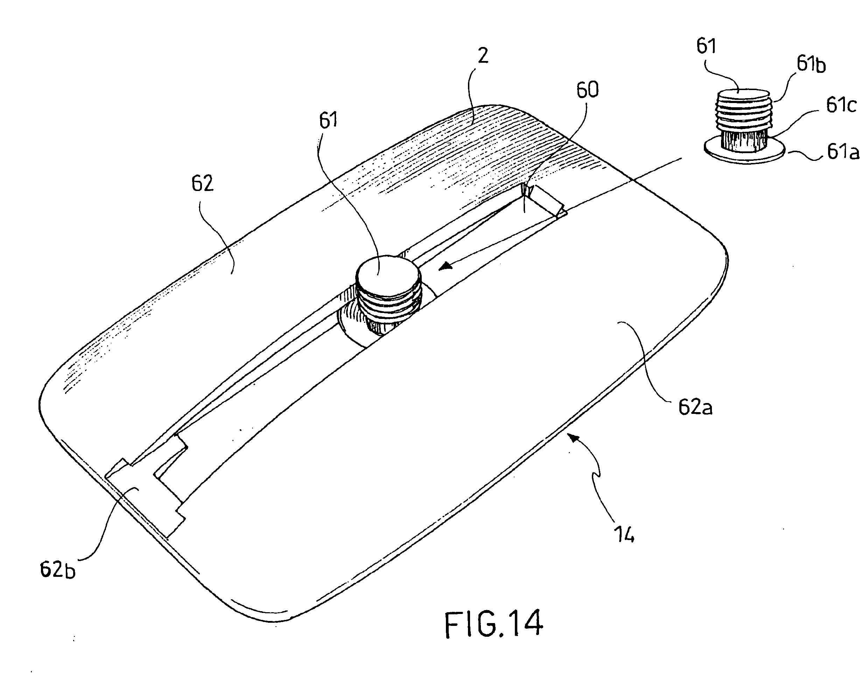

In accordance with a particularly advantageous embodiment (Fig. 14), the rest portion 2 comprises a bent upper plate 62a, preferably convex (as seen from above) and a substantially plane lower plate (62b), which are connected to each other as one piece, such that the lower plate 62b forms a rest surface for the support, and the bent upper plate, the track 60 being formed therein, contributes to adjusting the position of the saddle 61. The track 60 preferably consists of two side edges of a simple slit in the upper plate 62a and the saddle 61 comprises suitable seats suitable to accommodate the two side edges such as to allow the saddle 61 to rotate relative to the track 60. The seats of the saddle are advantageously formed in the shape of a throat 61c between a flange 61a and a threading 61b of the saddle 61. In order to allow a mutual rotation between the saddle and track (which is required for the camera to be screwed on the saddle and a simultaneous or subsequent angular orientation of the same), the throat 61c of the saddle has a cylindrical shape. Due to the threading 61b being screwed within the threaded seat of the camera, the two opposite edges of the track are fitted between the flange 61a of the saddle and the camera, such that the position of the latter is fixed relative to the saddle and track. In order to perform this screwing operation in a comfortable manner, the flange (i.e. the head 61a) of the saddle is preferably accessible from the lower side of the support, opposite to the side on which the camera is positioned.

Preferably, the track 60 is opened only on one side, such that, on the one hand, the saddle can be completely removed, and on the other hand, it can be firmly positioned in the end-of-stroke position opposite to the track open side.

In accordance with a particularly advantageous embodiment, such as discussed above, the rest portion 2, 62 comprises a case 2, i.e. a recess suitable to enclose the camera 4 therein, such as to form a casing - support unit that allows further reducing the size and weight of the camera, case and support assembly both in use and during transportation in a pocket or during storage in a cabinet.

Advantageously, the case 2 is manufactured separately from the plate 62 and subsequently connected thereto.

The case 2 is suitable to enclose the camera 4 therein, and preferably comprises a closure 2 that prevents the camera 4 from accidentally coming out of the case 2 after it has been placed therein.

In accordance with an embodiment, such as sectionally represented in Fig. 8, the case 2 comprises walls 21 which allow avoiding or limiting the damages resulting from accidental impacts or falls to which the camera 4 is inevitably subjected when it is placed in a user's pocket. The walls 21 can be, for example, stuffed with an expanded material 22.

The walls 21 of the case 2 preferably comprise a rigid or semi-rigid framework 23. The framework 23 protects the camera 4 from any possible pressure when it is placed in the case 2. The framework 23 further gives stability to the casing 1 when it is stressed while functioning as the rest portion for the support 1 during the recording operation.

In accordance with a further embodiment, the outer surface 24 of the walls 21 of the case 2 is covered in order to improve the visual appearance of the support 1. The outer surface 24 can be covered with tissues, leather or other materials that are deemed suitable for their characteristics and appearance according to the particular requirements.

In accordance with further embodiments, the outer surface 24 of the walls 21 does not require any covering.

Advantageously, the outer surface 24 of the bottom wall of the case 2 which forms the bottom wall of the rest portion 2, 62, i.e. the wall opposite the wall supporting the plate 62, comprises a plurality of feet 25. The feet 25 are suitable to protect the surface of the case 2 and ensure a firm placement on any surface. The feet 25, for example, can be made of a material having a high friction coefficient, such as an elastomer.

Advantageously, the plate 62 is connected to the case 2 by means of a stitching, preferably one or more annular (either individual or double) stitchings that preferably extend completely about the track 60 in which the connection is obtained between the camera and the support 1. Such a connection by means of stitching is particularly firm and not bulky.

With reference to the means for connecting the photo or video recording equipment to the support, these connecting means must possibly and advantageously comprise gripping means, such as a fork or a clip, for example made of an elastic material (plastic or harmonic steel) suitable to grip, i.e. at least partially surround the equipment, for example a digital camera or cell phone with a built-in digital camera. Alternatively, the connecting means comprise engaging plugs having such a shape that they can be fitted in the ports provided in the equipment, such as a cell phone, in order to provide the connection between the equipment and the slitta of the supporto.

At the same time, those skilled in the art will appreciate how, as a case has been integrated within the support for the recording operation, the user can take much advantage of this embodiment of the invention.

Furthermore, those skilled in the art will appreciate that the support according to the invention allows the external size to be reduced, to the extent of being comfortably transported by a user, such as by being placed in a pocket, without the encumbrance of outer projections.

To the preferred embodiments of the support as described above, those skilled in the art, aiming at satisfying contingent and specific needs, may carry out a number of modifications, adaptations and replacements of elements with others functionally equivalent, without however departing from the scope of the claims below.

## Claims

1. A support (1) for a photo/video recording equipment (4) or camera, comprising:
a rest portion (2, 62) suitable for resting the support (1) on a surface;
fixing means (5) suitable to removably connect the camera (4) to an outer side of the rest portion (2, 62) and;
adjusting means (6) that allow adjusting the orientation of the camera (4) relative to the rest portion (2, 62) when the latter are connected to each other by means of said fixing means (5),
**characterized in that** the adjusting means (6) comprise a track (60) and a saddle (61) suitable to slide along the track (60).

2. The support (1) according to claim 1, wherein said track (60) is bent such that a displacement of the saddle (61) along said bent track entails an adjustment of the angular orientation of the saddle (61).

3. The support (1) according to claim 1 or 2, wherein said rest portion (2, 62) comprises a plate (62) and said track (60) is formed in said plate (62).

4. The support (1) according to the preceding claim, wherein said plate (62) is convex on the outer side of the track (60) and the bending of the plate determines the bending of the track (60).

5. The support (1) according to any preceding claim, wherein said saddle (61) comprises a projection (50) suitable to engage a corresponding seat (45) in the camera (4) to provide said fixing means (5).

6. The support (1) according to any preceding claim, wherein said track (60) and said saddle (61) have matching shapes and such a size as to provide a frictional coupling therebetween.

7. The support (1) according to any preceding claim, wherein the contact surfaces between the saddle (61) and the track (60) are made of a thermoplastic and/or elastomeric material, such as to obtain a high sliding friction.

8. The support (1) according to any preceding claim, wherein between the saddle (61) and the track (60) there is provided a coupling with an interference sufficiently high to ensure a firm connection and sufficiently low to ensure, however, a manual displacement of the saddle (61) along the track (60).

9. The support (1) according to any preceding claim, wherein the saddle (61) can be removed and detached from the track (60).

10. The support (1) according to any preceding claim, wherein said track (60) has a shape matching with and suitable to engage a seat having a C-shaped section similar to the seats intended to accommodate a flash on a camera.

11. The support (1) according to claim 5, or any claim depending thereon, wherein said projection (50) is a standard screw consistent with a camera conventional threaded seat (45) in cameras.

12. The support (1) according to claim 5, or any claim depending thereon, wherein said projection (50) is an unthreaded pin to be frictionally coupled with a conventional threaded hole(45).

13. The support (1) according to the preceding claim, wherein an outer surface of said pin is knurled, grooved or corrugated in order to increase the friction with said conventional threaded seat (45) of the camera.

14. The support (1) according to claim 12 or 13, wherein an outer surface of said pin is made of a polymer and/or elastomer with a high friction coefficient.

15. The support (1) according to any claim 12 to 14, wherein said pin is sized such that a slight interference is obtained with the thread of the conventional threaded hole (45).

16. The support (1) according to the preceding claim, wherein said outer surface of said pin is made of a deformable material such as to be able to adapt its shape to the thread of the conventional threaded hole (45) to provide said slight interference.

17. The support (1) according to any preceding claim, being formed as one piece, except for the saddle (61) .

18. The support (1) according to any preceding claim, being made of polymeric or elastomeric material.

19. The support (1) according to any preceding claim, wherein said support (1) is substantially platelike with a height perpendicular to a hypothetical main plane (π) lower than half the diameter extension thereof parallel to said main rest plane (π)

20. The support (1) according to any preceding claim, wherein said rest portion (2, 62) comprises a case (2) suitable to enclose said camera (4) therein, such as to form a casing-support unit (1).

21. The support (1) according to the preceding claim, wherein said case (2) is fabricated separately from said plate (62) and subsequently connected thereto.

22. The support (1) according to the preceding claim, wherein said plate (62) is connected to the case (2) by means of one or more stitchings.

23. The support (1) according to the preceding claim, wherein said plate (62) is connected to the case (2) by means of one or more annular stitchings that preferably extend completely about the track (60).

24. The support (1) according to claim 20 or any claim depending thereon, wherein said case (2) comprises a closure (20).

25. The support (1) according to claim 20 or any claim depending thereon, wherein said case (2) has walls (21) comprising a rigid or semi-rigid framework (23).

26. The support (1) according to claim 20 or any claim depending thereon, wherein the wall of said case (2) opposite the wall accommodating the plate (62) comprises rest feet (25).

27. The support (1) according to the preceding claim, wherein said feet (25) are made of a material having a high friction coefficient.

28. A kit comprising a photo/video/sound recording equipment (4) and a support (1) according to any preceding claim.
